# EUROPÄISCHE PATENTSCHRIFT

(11) **EP 2 835 283 B1**
(45) Veröffentlichungstag und Bekanntmachung des Hinweises auf die Patenterteilung: **06.06.2018**
(21) Anmeldenummer: 14002220.3
(22) Anmeldetag: 28.06.2014
(51) Int. Cl.: B60W 50/14, B60W 50/00, B60Q 3/80, B60Q 9/00

(54) **Kraftfahrzeug**
Motor vehicle
Véhicule automobile

(30) Priorität: 15.07.2013 DE 102013011826
(43) Veröffentlichungstag der Anmeldung: 11.02.2015
(73) Patentinhaber: AUDI AG, 85045 Ingolstadt (DE)
(72) Erfinder: Hainzlmaier, Andre, 85290 Geisenfeld (DE); Heinemann, Patrick, 85092 Kösching (DE); Profendiner, Daniel, 85049 Ingolstadt (DE); Enning, Martin, 85049 Ingolstadt (DE); Viet Hoang, Pham, 85055 Ingolstadt (DE)
(74) Vertreter: Thielmann, Frank

(56) Entgegenhaltungen:
- EP-A2- 1 150 266
- EP-A2- 1 946 967
- WO-A1-2009/089109
- DE-A1-102006 023 265
- DE-A1-102008 064 022
- DE-A1-102011 013 777
- DE-A1-102012 214 204
- US-A1- 2011 084 852

## Beschreibung

Die Erfindung betrifft ein Kraftfahrzeug, umfassend wenigstens eine Beleuchtungseinrichtung, welche zur Beleuchtung wenigstens eines Teils des Fahrzeuginnenraums ausgebildet ist, sowie eine Steuereinrichtung, welche zur Steuerung des Betriebs der Beleuchtungseinrichtung ausgebildet ist.

Kraftfahrzeuge mit entsprechenden, den Fahrzeuginnenraum beleuchtenden Beleuchtungseinrichtungen sowie diesen zugehörigen Steuereinrichtungen sind bekannt. Die Beleuchtungseinrichtungen sind an unterschiedlichen Stellen im Fahrzeuginnenraum, wie z. B. unterhalb der Sitze, in den Verkleidungen der Armlehen oder des Dachs bzw. Himmels, angeordnet und dienen typischerweise der Erzeugung einer stimmungsvollen bzw. gegebenenfalls stimmungsbeeinflussenden Beleuchtungssituation. Die über derartige Beleuchtungseinrichtungen erzeugte Beleuchtung des Fahrzeuginnenraums wird regelmäßig als "ambient lighting" bezeichnet.

Entsprechende Beleuchtungseinrichtungen werden auch für andere als die vorstehend beschriebenen Zwecke eingesetzt. Insbesondere werden derartige Beleuchtungseinrichtungen auch dafür eingesetzt, dem Fahrer im Fahrbetrieb des Kraftfahrzeugs bestimmte Fahrsituationen kenntlich zu machen.

DE102011013777 A1 offenbart ein Kraftfahrzeug mit mindestens zwei im Innenraum des Fahrzeugs verteilten Leuchtmitteln, deren Lichtfarbe in Abhängigkeit von der Querbeschleunigung des Fahrzeugs gesteuert wird.

DE102006023265 A1 offenbart eine Vorrichtung und ein Verfahren zur Vermeidung des Überrollens eines Fahrzeugs. Eine maximal zulässige Querbeschleunigung wird berechnet, auf Basis des aktuellen Fahrzustand des Fahrzeugs und eines erfassten Spurverlaufs wird die zukünftige Querbeschleunigung prädiziert, und auf Basis eines Vergleichs der prädizierten Querbeschleunigung mit der maximal zulässigen Querbeschleunigung wird eine Warnung ausgegeben. Der Erfindung liegt sonach die Aufgabe zugrunde, ein Kraftfahrzeug mit einer demgegenüber verbesserten Steuerung einer Beleuchtungseinrichtung anzugeben.

Die Aufgabe wird erfindungsgemäß durch ein Kraftfahrzeug der eingangs genannten Art gelöst, welches sich dadurch auszeichnet, dass die Steuereinrichtung derart eingerichtet ist, den Betrieb der Beleuchtungseinrichtung in Abhängigkeit wenigstens eines im Fahrbetrieb auf Basis des aktuellen Fahrzustands des Kraftfahrzeugs ermittelten, den aktuellen Fahrzustand des Kraftfahrzeugs bewertenden Fahrzustandsbewertungsparameters zu steuern.

Das erfindungsgemäße Kraftfahrzeug umfasst eine oder mehrere Beleuchtungseinrichtungen zur wenigstens teilweisen Beleuchtung des Fahrzeuginnenraums. Über die Beleuchtungseinrichtung(en) können bestimmte Bereiche des Fahrzeuginnenraums gezielt beleuchtet werden. Eine Beleuchtungseinrichtung umfasst typischerweise Leuchtmittel, wie z. B. LEDs, über welche eine bestimmte Beleuchtungssituation des Fahrzeuginnenraums realisierbar ist. Es handelt sich bei der oder den Beleuchtungseinrichtungen demnach nicht um Einrichtungen, wie z. B. Displays, die ebenso eine gewisse Lichtabstrahlung in den Fahrzeuginnenraum erzeugen. Typischerweise sind in dem Fahrzeuginnenraum des erfindungsgemäßen Kraftfahrzeugs mehrere entsprechende Beleuchtungseinrichtungen verteilt angeordnet, welche im Rahmen der Beleuchtung des Fahrzeuginnenraums einzeln, in Gruppen oder vollständig über entsprechende diesen zugeordnete Steuereinrichtungen oder eine gemeinsame Steuereinrichtung angesteuert bzw. betrieben werden können.

Erfindungsgemäß ist die oder sind die den jeweiligen Beleuchtungseinrichtungen zugeordnete(n) Steuereinrichtung(en) derart eingerichtet, dass der Betrieb der Beleuchtungseinrichtung(en) in Abhängigkeit wenigstens eines auf Basis des aktuellen Fahrzustands des Kraftfahrzeugs ermittelten, den aktuellen Fahrzustand des Kraftfahrzeugs bewertenden Fahrzustandsbewertungsparameters steuerbar bzw. gesteuert ist. Die Beleuchtungseinrichtungen werden demnach in Abhängigkeit einer Bewertung des aktuellen Fahrzustands bzw. Fahrbetriebs des Kraftfahrzeugs gesteuert. Die Bewertung des aktuellen Fahrzustands bzw. Fahrbetriebs des Kraftfahrzeugs wird durch den auf dem aktuellen Fahrzustand bzw. Fahrbetrieb basierend im Fahrbetrieb des Kraftfahrzeugs, insbesondere kontinuierlich, ermittelten Fahrzustandsbewertungsparameter vorgenommen, durch welchen sonach eine Bewertung des aktuellen Fahrzustands bzw. Fahrbetriebs des Kraftfahrzeugs möglich ist. Die Bewertung kann grundsätzlich im Hinblick auf unterschiedliche Bewertungskriterien erfolgen. Insbesondere ist es dabei möglich, den aktuellen Fahrzustand bzw. Fahrbetrieb des Kraftfahrzeugs im Hinblick auf das Bewertungskriterium der Fahrdynamik zu bewerten.

Das erfindungsgemäße Prinzip sieht also vor, den Betrieb der kraftfahrzeugseitigen zur Beleuchtung des Fahrzeuginnenraums vorgesehenen Beleuchtungseinrichtung(en) derart zu steuern, dass die Fahrzeuginsassen, d. h. insbesondere der Fahrer, anhand einer durch die Beleuchtungseinrichtungen generierten Beleuchtungssituation erkennen können, wie der durch seine Fahrweise bedingte aktuelle Fahrzustand im Hinblick auf ein bestimmtes Bewertungskriterium bewertet wird. Der hierfür auf Basis des aktuellen Fahrzustands bzw. Fahrbetriebs ermittelte Fahrzustandsbewertungsparameter wird den Fahrzeuginsassen, d. h. insbesondere dem Fahrer, sonach über eine entsprechende Beleuchtungssituation des Fahrzeuginnenraums optisch kenntlich gemacht. Die Steuereinrichtung ist dazu eingerichtet, den Fahrzustandsbewertungsparameter anhand eines Vergleichs der aktuellen Längs- und/oder Querbeschleunigung des Kraftfahrzeugs mit einem auf die aktuelle Fahrsituation bezogenen Maximalwert der Längs- und/oder Querbeschleunigung, bei welchem die Haftung des Kraftfahrzeugs auf der Fahrbahn noch gewährleistet ist, zu ermitteln. Bei dem Bewertungskriterium handelt es sich in dieser Ausführungsform sonach um die Längs- und/oder Querbeschleunigung des Kraftfahrzeugs. Der aktuelle Fahrzustand des Kraftfahrzeugs wird in dieser Ausführungsform also grundsätzlich auf Basis der aktuellen Längs- und/oder Querbeschleunigung bewertet. Die Bewertung erfolgt anhand eines Vergleichs der aktuellen Längs- und/oder Querbeschleunigung des Kraftfahrzeugs mit einem auf die aktuelle Fahrsituation bezogenen Maximalwert (physikalischen Grenzwert) der Längs- und/oder Querbeschleunigung, bei welchem die Haftung des Kraftfahrzeugs auf der Fahrbahn (gerade) noch gewährleistet, d. h. mit einer auf die aktuelle Fahrsituation bezogenen maximal möglichen Längs- und/oder Querbeschleunigung, bei welcher die Haftung des Kraftfahrzeugs auf der Fahrbahn (gerade) noch gewährleistet ist. Ein entsprechender Maximalwert der Längs- und/oder Querbeschleunigung kann beispielsweise über geeignete Algorithmen ermittelt werden. Der Fahrzustandsbewertungsparameter bewertet den aktuellen Fahrzustand demnach dahin, wie nah die bei der aktuellen Fahrweise gegebene bzw. wie nah die bei dem aktuellen Fahrzustand gegebene aktuelle Längs- und/oder Querbeschleunigung des Kraftfahrzeugs einem auf die aktuelle Fahrsituation bezogenen, die aktuell maximal mögliche Längs- und/oder Querbeschleunigung betreffenden physikalischen Grenzwert bzw. Grenzbereich ist. Die Bewertung des Fahrzustands wird den Fahrzeuginsassen, d. h. insbesondere dem Fahrer, wie erwähnt, über eine entsprechende, über die Beleuchtungseinrichtungen generierte Beleuchtungssituation des Fahrzeuginnenraums optisch kenntlich gemacht.

Durch den Fahrzustandsbewertungsparameter und eine damit korrelierte Beleuchtungssituation des Fahrzeuginnenraums kann also beispielsweise kenntlich gemacht werden, dass der Fahrer die aktuelle Fahrsituation eigentlich mit einer deutlich höheren Längs- und/oder Querbeschleunigung bewältigen könnte, ohne einen Haftungsverlust des Kraftfahrzeugs, d. h. insbesondere wenigstens eines Rades, insbesondere eines Antriebsrades, und so einen Kontrollverlust über das Kraftfahrzeug zu riskieren. Gleichermaßen kann dem Fahrer durch den Fahrzustandsbewertungsparameter bzw. durch eine damit korrelierte Beleuchtungssituation des Fahrzeuginnenraums ebenso kenntlich gemacht werden, dass sich in der aktuellen Fahrsituation bei einer weiteren Erhöhung der Längs- und/oder Querbeschleunigung ein Verlust der Haftung des Kraftfahrzeugs auf der Fahrbahn und so gegebenenfalls ein Kontrollverlust ergeben wird. In den beiden beschriebenen beispielhaften Fällen werden die Beleuchtungseinrichtungen sonach typischerweise unterschiedlich angesteuert und demzufolge unterschiedliche Beleuchtungssituationen des Fahrzeuginnenraums generiert.

Der Maximalwert (Grenzwert) für die Längsbeschleunigung kann sich demnach insbesondere auf eine bezogen auf die aktuelle Fahrsituation maximal mögliche Längsbeschleunigung des Kraftfahrzeugs beziehen, bei welcher das Kraftfahrzeug längsbeschleunigungsbedingt die Haftung auf der Fahrbahn nicht verliert bzw. längsbeschleunigungsbedingt nicht von der Fahrbahn bzw. Fahrspur abkommt. Die Steuereinrichtung kann demnach dazu eingerichtet sein, in die Ermittlung der maximal möglichen Längsbeschleunigung die auf die aktuelle Fahrsituation bezogene maximal mögliche Motorleistung, insbesondere das maximal mögliche Motordrehmoment, mit einzubeziehen. Mithin kann durch den Fahrzustandsbewertungsparameter und eine entsprechende Beleuchtungssituation des Fahrzeuginnenraums z. B. angegeben werden, ob das Kraftfahrzeug respektive ein diesem zugehöriges Antriebsaggregat Leistungsreserven hat, um das Kraftfahrzeug im Hinblick auf die aktuell maximal mögliche Längsbeschleunigung weiter längs zu beschleunigen, ohne die Haftung auf der Fahrbahn zu verlieren bzw. ein haftungsverlustbedingtes Abkommen des Kraftfahrzeugs von der Fahrbahn bzw. Fahrspur zu riskieren und somit gegebenenfalls die Kontrolle über das Kraftfahrzeug zu verlieren. Gleichermaßen kann durch den Fahrzustandsbewertungsparameter und eine entsprechende Beleuchtungssituation des Fahrzeuginnenraums kenntlich gemacht werden, dass entsprechende Leistungsreserven aktuell nicht vorhanden sind.

Der Maximalwert (physikalische Grenzwert) für die Querbeschleunigung kann sich auf eine bezogen auf die aktuelle Fahrsituation maximal mögliche Querbeschleunigung des Kraftfahrzeugs beziehen, bei welcher das Kraftfahrzeug querbeschleunigungsbedingt die Haftung auf der Fahrbahn nicht verliert bzw. querbeschleunigungsbedingt nicht von der Fahrbahn bzw. Fahrspur abkommt. Die Steuereinrichtung kann dazu eingerichtet sein, in die Ermittlung der maximal möglichen Querbeschleunigung eine auf den aktuellen Fahrzustand bezogene, den Schlupf wenigstens eines Rads, insbesondere wenigstens eines Antriebsrads, des Kraftfahrzeugs beschreibende Schlupfinformation mit einzubeziehen. Eine entsprechende Schlupfinformation kann beispielsweise durch ein kraftfahrzeugseitiges System zur Anti-Schlupf-Regelung oder ein kraftfahrzeugseitiges Fahrzeugstabilitäts- oder Fahrdynamikregelungssystem, wie z. B. eine elektronische Stabilitätskontrolle, kurz ESC, bereitgestellt werden. Folglich kann hier durch den Fahrzustandsbewertungsparameter und eine entsprechende Beleuchtungssituation des Fahrzeuginnenraums z. B. angegeben werden, ob das Kraftfahrzeug, z. B. durch bestimmte Lenkmanöver, weiter querbeschleunigt werden kann, um dieses im Hinblick auf die aktuell maximal mögliche Querbeschleunigung weiter quer zu beschleunigen, ohne die Haftung auf der Fahrbahn zu verlieren bzw. ein Abkommen des Kraftfahrzeugs von der Fahrbahn bzw. Fahrspur und somit gegebenenfalls die Kontrolle über das Kraftfahrzeug zu verlieren. Gleichermaßen kann durch den Fahrzustandsbewertungsparameter und eine entsprechende Beleuchtungssituation angegeben werden, dass eine weitere Querbeschleunigung aktuell nicht möglich ist, ohne einen Verlust der Haftung des Kraftfahrzeugs auf der Fahrbahn bzw. ein Abkommen von der Fahrbahn bzw. Fahrspur zu riskieren und somit gegebenenfalls die Kontrolle über das Kraftfahrzeug zu verlieren.

In einer weiteren vorteilhaften Ausführungsform der Erfindung ist es vorgesehen, dass die Steuereinrichtung dazu eingerichtet ist, in die Ermittlung des Fahrzustandsbewertungsparameters eine den Streckenverlauf der aktuell befahrenen Strecke wenigstens abschnittsweise beschreibende Streckeninformationen miteinzubeziehen. Durch die Miteinbeziehung einer entsprechenden den Streckenverlauf beschreibenden Streckeninformation kann eine exaktere Bewertung des aktuellen Fahrzustands, d. h. insbesondere auch eine exaktere Ermittlung entsprechender Maximalwerte (Grenzwerte) der Längs- und/oder Querbeschleunigung vorgenommen werden, da derart z. B. Kurvenradien, Längs- und/oder Querneigungen der Fahrbahn sowie der Fahrbahnbelag bzw. die Oberflächenbeschaffenheit der Fahrbahn, mithin sämtliche auf die aktuell oder künftig befahrene Strecke bezogene, die jeweiligen Maximalwerte der Längs- und/oder Querbeschleunigung möglicherweise beeinflussende Streckenparameter berücksichtigt werden können. Eine entsprechende Streckeninformation, d. h. insbesondere der Streckenverlauf, kann beispielsweise über kraftfahrzeugseitig vorhandene Strecken- bzw. Navigationsdaten bekannt sein. Denkbar ist es z. B. auch, dass der Streckenverlauf von einem Fahrer individuell vorgegeben wird, was beispielsweise zweckmäßig sein kann, wenn der Fahrer im Begriff ist, das Kraftfahrzeug auf einer vorgegebenen, insbesondere rundkursartigen, Rennstrecke zu bewegen. Der Fahrer kann eine den Streckenverlauf, d. h. insbesondere den kompletten Streckenverlauf, beschreibende Streckeninformation datenmäßig über eine geeignete Datenschnittstelle an das Kraftfahrzeug respektive die Steuereinrichtung übermitteln.

Eine bevorzugte Ausführungsform der Erfindung sieht dabei vor, dass die Streckeninformation Streckenabschnitte, in welchen das Kraftfahrzeug verzögert werden muss, um nicht von der Strecke abzukommen, und/oder Streckenabschnitte, in welchen das Kraftfahrzeug beschleunigt werden muss, um den Streckenabschnitt möglichst dynamisch zu durchfahren, beschreibt. In der Streckeninformation können sonach streckenbezogene optimale Verzögerungspunkte (Brems- oder Verzögerungspunkte) für bestimmte Streckenabschnitte, z. B. vor Kurven, definiert sein. Im Hinblick auf die oben beschriebene, anhand des Fahrzustandsbewertungsparameters zu bewertende Fahrdynamik des Kraftfahrzeugs kann dem Fahrer sonach durch eine entsprechende Beleuchtungssituation des Fahrzeuginnenraums kenntlich gemacht werden, wann ein entsprechender Verzögerungspunkt gegeben ist, um z. B. eine Kurve möglichst dynamisch, d. h. insbesondere im Grenzbereich der Längs- und/oder Querbeschleunigung, mithin ohne einen Verlust der Bodenhaftung der Räder zu riskieren, zu durchfahren. Die Kenntlichmachung kann beispielsweise derart erfolgen, dass über eine bestimmte Beleuchtungssituation des Fahrzeuginnenraums zunächst angekündigt wird, dass ein entsprechender Brems- oder Verzögerungspunkt unmittelbar voraus liegt. Über eine Änderung der Beleuchtungssituation des Fahrzeuginnenraums kann der Abstand der aktuellen Position des Kraftfahrzeugs zu dem vorausliegenden Verzögerungspunkt, d. h. der Position, an dem das Kraftfahrzeug, um möglichst dynamisch bewegt zu werden, verzögert werden sollte, kenntlich gemacht werden. Die Beleuchtungssituation des Fahrzeuginnenraums kann demnach in Abhängigkeit des Abstands zwischen der aktuellen Position des Kraftfahrzeugs und dem vorausliegenden Verzögerungspunkt variiert werden.

Analog dazu kann ein voraus liegender Punkt, an dem das Kraftfahrzeug, z. B. während oder nach dem Durchfahren einer Kurve, zu beschleunigen ist, über eine entsprechende Beleuchtungssituation des Fahrzeuginnenraums respektive über eine entsprechende Änderung der Beleuchtungssituation des Fahrzeuginnenraums kenntlich gemacht werden. Die Streckeninformation kann daher auch Streckenabschnitte, in welchen das Kraftfahrzeug beschleunigt werden muss, um den aktuellen oder einen künftigen Streckenabschnitt möglichst dynamisch zu durchfahren, beschreiben.

Zweckmäßig können die in der Streckeninformation beschriebenen Streckenabschnitte anhand eines mehrmaligen Befahrens der Strecke bzw. der Streckenabschnitte ermittelbar oder ermittelt sein. Die jeweiligen besondere vorzunehmende Änderungen des Fahrzustands, wie insbesondere Verzögern oder Beschleunigen des Kraftfahrzeugs, betreffenden Streckenabschnitte, d. h. insbesondere Brems- oder Verzögerungspunkte oder Beschleunigungspunkte, können also erst nach bzw. durch mehrmaliges tatsächliches Befahren der entsprechenden Streckenabschnitte festgelegt werden. Über geeignete Algorithmen kann während des Durchfahrens der Strecke sowie insbesondere in Kenntnis des Streckenverlaufs eine Festlegung entsprechender Streckenabschnitte, d. h. eine Festlegung von Verzögerungspunkten und/oder Beschleunigungspunkten, erfolgen. Der hierfür verwendete Algorithmus ist sonach "lernfähig". Das beschriebene Prinzip eignet sich insbesondere für entsprechende Streckenabschnitte auf rundkursartigen Rennstrecken.

Wie sich aus obigen Ausführungen ergibt, ist es möglich, dass die Steuereinrichtung dazu eingerichtet ist, in Abhängigkeit des Fahrzustandsbewertungsparameters die Farbgebung und/oder Frequenz und/oder Intensität des von der Beleuchtungseinrichtung ausgestrahlten Lichts zu variieren. In Abhängigkeit des Fahrzustandsbewertungsparameters ist bzw. sind die über die Beleuchtungseinrichtung(en) erzeugte(n) Beleuchtungssituation(en) des Fahrzeuginnenraums sonach grundsätzlich variierbar. Die Beleuchtungssituation kann insbesondere durch eine Änderung bzw. Variation der Farbgebung und/oder Frequenz und/oder Intensität des von der Beleuchtungseinrichtung ausgestrahlten Lichts erfolgen.

In diesem Zusammenhang ist es beispielsweise denkbar, dass eine rötliche Beleuchtung des Fahrzeuginnenraums erfolgt, wenn der Fahrzustandsbewertungsparameter angibt, dass der aktuelle Fahrzustand, d. h. insbesondere die aktuelle Längs- und/oder Querbeschleunigung des Kraftfahrzeugs, weit entfernt von entsprechenden, aktuell möglichen Maximalwerten (Grenzwerten) liegt. Dies kann beispielsweise der Fall sein, wenn die aktuelle Längs- und/oder Querbeschleunigung des Kraftfahrzeugs 50% eines entsprechenden, bei der aktuellen Fahrsituation gegebenen Maximalwerts der Längs- und/oder Querbeschleunigung beträgt. Gibt der Fahrzustandsbewertungsparameter dagegen einen aktuellen Fahrzustand mit einer im Vergleich höheren Längs- und/oder Querbeschleunigung an, welche sonach im Vergleich weniger weit entfernt von entsprechenden, aktuell möglichen Maximalwerten liegt, kann eine Beleuchtung des Fahrzeuginnenraums in orange erfolgen. Dies kann beispielsweise der Fall sein, wenn die aktuelle Längs- und/oder Querbeschleunigung des Kraftfahrzeugs 70% eines entsprechenden, bei der aktuellen Fahrsituation gegebenen Maximalwerts der Längs- und/oder Querbeschleunigung beträgt. Gibt der Fahrzustandsbewertungsparameter an, dass der aktuelle Fahrzustand und die damit verbundene Längs- und/oder Querbeschleunigung des Kraftfahrzeugs im Bereich entsprechender, aktuell möglicher Maximalwerte liegt, kann eine grünliche Beleuchtung des Fahrzeuginnenraums erfolgen. Dies kann beispielsweise der Fall sein, wenn die aktuelle Längs- und/oder Querbeschleunigung des Kraftfahrzeugs 90% eines entsprechenden, bei der aktuellen Fahrsituation gegebenen Maximalwerts der Längs- und/oder Querbeschleunigung beträgt.

Die vorstehend beschriebenen Prinzipien können in analoger Weise auch durch andersartige Färbungen und/oder unterschiedliche Intensitäten und/oder Frequenzen des von der oder den Beleuchtungseinrichtungen an den Fahrzeuginnenraum abgegebenen Lichts erfolgen oder begleitet werden.

Die Erfindung betrifft ferner ein Verfahren zum Betrieb wenigstens einer kraftfahrzeugseitigen Beleuchtungseinrichtung, welche zur Beleuchtung wenigstens eines Teils des Fahrzeuginnenraums eines Kraftfahrzeugs ausgebildet ist. Das Verfahren zeichnet sich dadurch aus, dass der Betrieb der Beleuchtungseinrichtung in Abhängigkeit wenigstens eines im Fahrbetrieb des Kraftfahrzeugs auf Basis des aktuellen Fahrzustands ermittelten, den aktuellen Fahrzustand bewertenden Fahrzustandsbewertungsparameters gesteuert wird.

Zu dem erfindungsgemäßen Verfahren gelten sämtliche Ausführungen bezüglich des erfindungsgemäßen Kraftfahrzeugs sowie dessen beschriebener möglicher Ausführungsformen analog.

Demnach kann es gemäß dem erfindungsgemäßen Verfahren vorgesehen sein, dass der Fahrzustandsbewertungsparameter anhand eines Vergleichs der aktuellen Längs- und/oder Querbeschleunigung des Kraftfahrzeugs mit einem auf die aktuelle Fahrsituation bezogenen Maximalwert der Längs- und/oder Querbeschleunigung, bei welchem die Haftung des Kraftfahrzeugs auf der Fahrbahn noch gewährleistet ist, ermittelt wird.

Der verwendete Maximalwert (physikalische Grenzwert) für die Längsbeschleunigung kann sich auf eine bezogen auf die aktuelle Fahrsituation maximal mögliche Längsbeschleunigung des Kraftfahrzeugs beziehen, bei welcher das Kraftfahrzeug längsbeschleunigungsbedingt die Haftung auf der Fahrbahn nicht verliert. Dabei kann in die Ermittlung der maximal möglichen Längsbeschleunigung die auf den aktuellen Fahrzustand bezogene maximal mögliche Motorleistung, insbesondere maximal mögliches Motordrehmoment, miteinbezogen werden.

Der verwendete Maximalwert (physikalische Grenzwert) für die Querbeschleunigung kann sich auf eine bezogen auf die aktuelle Fahrsituation maximal mögliche Querbeschleunigung des Kraftfahrzeugs beziehen, bei welcher das Kraftfahrzeug querbeschleunigungsbedingt die Haftung auf der Fahrbahn nicht verliert. Dabei kann die Ermittlung der maximal möglichen Querbeschleunigung eine auf den aktuellen Fahrzustand bezogene, den Schlupf wenigstens eines Rads des Kraftfahrzeugs beschreibende Schlupfinformation miteinbezogen werden.

In die Ermittlung des Fahrzustandsbewertungsparameters kann eine den Streckenverlauf der aktuell befahrenen Strecke wenigstens abschnittsweise beschreibende Streckeninformationen miteinbezogen werden. In der verwendeten Streckeninformation können Streckenabschnitte, in welchen das Kraftfahrzeug verzögert werden muss, um nicht von der Strecke abzukommen, und/oder Streckenabschnitte, in welchen das Kraftfahrzeug beschleunigt werden muss, um den Streckenabschnitt möglichst dynamisch zu durchfahren, beschrieben sein. Die in der Streckeninformation beschriebenen Streckenabschnitte können anhand eines mehrmaligen Befahrens der Streckenabschnitte ermittelt werden bzw. ermittelt worden sein.

In Abhängigkeit des Fahrzustandsbewertungsparameters kann die Farbgebung und/oder Frequenz und/oder Intensität des von der Beleuchtungseinrichtung ausgestrahlten Lichts variiert werden.

Weitere Vorteile, Merkmale und Einzelheiten der Erfindung ergeben sich aus den im Folgenden beschriebenen Ausführungsbeispielen sowie anhand der Zeichnungen. Dabei zeigt:
- Fig. 1: eine Prinzipdarstellung eines Kraftfahrzeugs gemäß einem Ausführungsbeispiel der Erfindung; und
- Fig. 2, 3: je eine Prinzipdarstellung eines Kraftfahrzeugs gemäß einem Ausführungsbeispiel der Erfindung in einer bestimmten Fahrsituation.

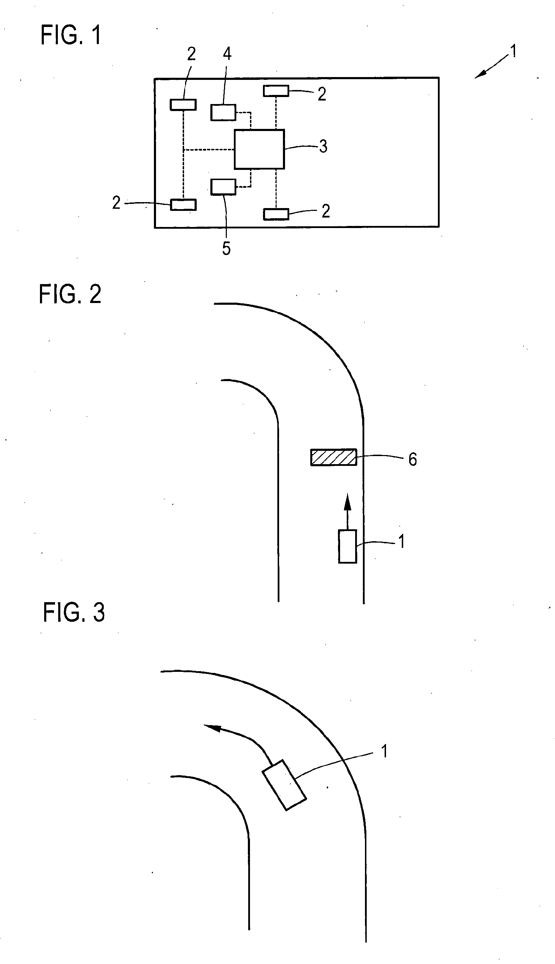

Fig. 1 zeigt eine Prinzipdarstellung eines Kraftfahrzeugs 1 gemäß einem Ausführungsbeispiel der Erfindung. Das Kraftfahrzeug 1 ist mit im Fahrzeuginnenraum verteilt angeordneten Beleuchtungseinrichtungen 2 ausgestattet. Die Beleuchtungseinrichtungen 2sind beispielsweise unterhalb der Sitze, in den Verkleidungen der Armlehen bzw. des Dachs respektive des Himmels angeordnet.

Über die Beleuchtungseinrichtungen 2 ist eine Beleuchtung des Fahrzeuginnenraums oder bestimmter Bereiche des Fahrzeuginnenraums möglich. Über die Beleuchtungseinrichtungen 2 kann in dem Fahrzeuginnenraum sonach eine stimmungsvolle bzw. gegebenenfalls stimmungsbeeinflussende Beleuchtungssituation generiert werden ("ambient lighting"). Die jeweiligen Beleuchtungseinrichtungen 2 umfassen jeweils ein oder mehrere Leuchtmittel, z. B. in Form von LEDs, über welche Licht in unterschiedlichen Färbungen, Frequenzen und Intensitäten abgegeben werden kann.

Der Betrieb der Beleuchtungseinrichtungen 2 wird über eine diesen zugeordnete, kraftfahrzeugseitige Steuereinrichtung 3 gesteuert. Über die Steuereinrichtung 3 ist sonach insbesondere steuerbar, ob, und wenn ja, welches Licht, d. h. insbesondere welche Färbung, Frequenz und Intensität des Lichts, über welche Beleuchtungseinrichtung 2 abgegeben wird.

Die Steuereinrichtung 3 ist dazu eingerichtet, den Betrieb der Beleuchtungseinrichtungen 2 in Abhängigkeit eines ermittelten Fahrzustandsbewertungsparameters zu steuern. Der Fahrzustandsbewertungsparameter wird im Fahrbetrieb des Kraftfahrzeugs 1 auf Basis des aktuellen Fahrzustands des Kraftfahrzeugs 1 ermittelt. Anhand des ermittelten Fahrzustandsbewertungsparameters kann der aktuelle Fahrzustand bzw. Fahrbetrieb des Kraftfahrzeugs 1 sonach im Hinblick auf wenigstens ein bestimmtes Bewertungskriterium bewertet werden.

Entsprechende Bewertungskriterien können allgemein mit die Fahrdynamik beeinflussenden bzw. betreffenden physikalischen Größen des Kraftfahrzeugs 1 zusammenhängen. Bei den Bewertungskriterien kann es sich insbesondere um Längs- und/oder Querbeschleunigungen des Kraftfahrzeugs 1 handeln. Die im aktuellen Fahrzustand bzw. Fahrbetrieb des Kraftfahrzeugs 1 gegebene aktuelle Längs- und/oder Querbeschleunigung des Kraftfahrzeugs 1 kann sonach im Hinblick auf jeweilige, auf die aktuelle Fahrsituation bezogene Maximalwerte bzw. Grenzwerte der Längs- und/oder Querbeschleunigung bewertet werden, bei welchen die Haftung des Kraftfahrzeugs 1 auf der Fahrbahn noch gewährleistet ist, mithin das Kraftfahrzeug 1 noch kontrollierbar ist, bewertet. Die Steuereinrichtung 3 ist daher dazu eingerichtet, den Fahrzustandsbewertungsparameter anhand eines Vergleichs der aktuellen Längs- und/oder Querbeschleunigung des Kraftfahrzeugs 1 mit einem auf die aktuelle Fahrsituation bezogenen Maximalwert der Längs- und/oder Querbeschleunigung, bei welchem die Haftung des Kraftfahrzeugs 1, d. h. insbesondere die Haftung der Räder, auf der Fahrbahn (gerade) noch gewährleistet ist, zu ermitteln.

Dem Fahrer wird sonach anhand der auf Basis des ermittelten Fahrzustandsbewertungsparameters besonderen Ansteuerung der Beleuchtungseinrichtungen 2 und der damit über die Beleuchtungseinrichtungen 2 in dem Fahrzeuginnenraum generierten Beleuchtungssituation optisch kenntlich gemacht, inwieweit sich das Kraftfahrzeug 1 bei der aktuellen Fahrweise, d. h. im aktuellen Fahrzustand von entsprechenden aktuell maximal möglichen, die Längs- und/oder Querbeschleunigung betreffenden physikalischen Grenzwerten entfernt bewegt. Dem Fahrer wird über die über die Beleuchtungseinrichtungen 2 generierte Beleuchtungssituation des Fahrzeuginnenraums sonach insbesondere optisch kenntlich gemacht, ob er das Kraftfahrzeug 1 im Hinblick auf die Fahrdynamik optimal bewegt. Dieses Prinzip kann beispielsweise nützlich sein, wenn das Kraftfahrzeug 1 auf einer, insbesondere rundkursartigen, Rennstrecke bewegt wird, da hier z. B. bestimmte Rundenzeiten zu absolvieren sind bzw. es allgemein angestrebt wird, das Kraftfahrzeug 1 im physikalischen Grenzbereich zu bewegen, d. h. insbesondere längs- und/oder querzubeschleunigen.

Der genannte Maximalwert für die Längsbeschleunigung kann sich auf eine bezogen auf die aktuelle Fahrsituation maximal mögliche Längsbeschleunigung des Kraftfahrzeugs 1 beziehen, bei welcher das Kraftfahrzeug 1 längsbeschleunigungsbedingt die Haftung auf der Fahrbahn nicht verliert und so haftungsverlustbedingt nicht von der Fahrbahn abkommt. In diesem Zusammenhang ist die Steuereinrichtung 3 insbesondere dazu eingerichtet, in die Ermittlung der maximal möglichen Längsbeschleunigung die auf den aktuellen Fahrzustand bezogene maximal mögliche Motorleistung, insbesondere das maximal mögliche Motordrehmoment, mit einzubeziehen. Bei der Ermittlung des Fahrzustandsbewertungsparameters können sonach bestimmte Zustandsparameter, wie z. B. Drehzahl, Leistung etc. des Motors, allgemein eines Antriebsaggregats 4, des Kraftfahrzeugs 1 berücksichtigt bzw. in die Ermittlung des Fahrzustandsbewertungsparameters miteinbezogen.

Der genannte Maximalwert für die Querbeschleunigung kann sich auf eine bezogen auf die aktuelle Fahrsituation maximal mögliche Querbeschleunigung des Kraftfahrzeugs 1 beziehen, bei welcher das Kraftfahrzeug 1 querbeschleunigungsbedingt die Haftung auf der Fahrbahn nicht verliert und so haftungsverlustbedingt nicht von der Fahrbahn abkommt. In diesem Zusammenhang ist die Steuereinrichtung 3 insbesondere dazu eingerichtet, in die Ermittlung der maximal möglichen Querbeschleunigung eine auf den aktuellen Fahrzustand bezogene, den Schlupf wenigstens eines Rads, insbesondere wenigstens eines Antriebsrads, des Kraftfahrzeugs 1 beschreibende Schlupfinformation mit einzubeziehen. Eine entsprechende Schlupfinformation kann beispielsweise durch ein kraftfahrzeugseitiges System 5 zur Anti-Schlupf-Regelung oder ein kraftfahrzeugseitiges Fahrzeugstabilitäts- oder Fahrdynamikregelungssystem, wie z. B. eine elektronische Stabilitätskontrolle, kurz ESC, bereitgestellt werden.

Anhand des typischerweise kontinuierlich ermittelten Fahrzustandsbewertungsparameters, welcher im Allgemeinen durch geeignete, in der Steuereinrichtung 3 hinterlegte Algorithmen ermittelt wird, lässt sich sonach der aktuelle Fahrzustand des Kraftfahrzeugs 1 insbesondere dahin bewerten, ob die Motorleistung und/oder die Haftung des Kraftfahrzeugs 1, d. h. die Haftung der Räder, auf der Fahrbahn im Hinblick auf eine möglichst hohe Fahrdynamik bestmöglich ausgenutzt wird. Die Bewertung des Fahrzustands wird dem Fahrer durch eine entsprechende, über eine auf dem Fahrzustandsbewertungsparameter basierende, mittels der Beleuchtungseinrichtungen 2 realisierte Beleuchtungssituation des Fahrzeuginnenraums optisch kenntlich gemacht.

Es ist dabei z. B. möglich, dass eine rötliche Beleuchtung des Fahrzeuginnenraums erfolgt, wenn der Fahrzustandsbewertungsparameter angibt, dass der aktuelle Fahrzustand, d. h. insbesondere die aktuelle Längs- und/oder Querbeschleunigung des Kraftfahrzeugs 1, qualitativ weit entfernt von entsprechenden, aktuell möglichen Maximalwerten (Grenzwerten) liegt. Dies kann beispielsweise der Fall sein, wenn die aktuelle Längs- und/oder Querbeschleunigung des Kraftfahrzeugs 1 50% eines entsprechenden, bei der aktuellen Fahrsituation gegebenen Maximalwerts der Längs- und/oder Querbeschleunigung beträgt.

Gibt der Fahrzustandsbewertungsparameter dagegen einen aktuellen Fahrzustand mit einer im Vergleich höheren Längs- und/oder Querbeschleunigung an, welche sonach im Vergleich weniger weit entfernt von entsprechenden, aktuell möglichen Maximalwerten liegt, kann eine Beleuchtung des Fahrzeuginnenraums in orange erfolgen. Dies kann beispielsweise der Fall sein, wenn die aktuelle Längs- und/oder Querbeschleunigung des Kraftfahrzeugs 1 70% eines entsprechenden, bei der aktuellen Fahrsituation gegebenen Maximalwerts der Längs- und/oder Querbeschleunigung beträgt.

Gibt der Fahrzustandsbewertungsparameter an, dass der aktuelle Fahrzustand und die damit verbundene Längs- und/oder Querbeschleunigung des Kraftfahrzeugs 1 im Bereich entsprechender, aktuell möglicher Maximalwerte liegt, kann eine grünliche Beleuchtung des Fahrzeuginnenraums erfolgen. Dies kann beispielsweise der Fall sein, wenn die aktuelle Längs- und/oder Querbeschleunigung des Kraftfahrzeugs 1 90% eines entsprechenden, bei der aktuellen Fahrsituation gegebenen Maximalwerts der Längs- und/oder Querbeschleunigung beträgt.

Eine entsprechende Kenntlichmachung einer durch den Fahrzustandsbewertungsparameter beschriebenen Bewertung des aktuellen Fahrzustands kann auch durch eine Änderung der Färbung und/oder der Frequenz und/oder der Intensität des von den Beleuchtungseinrichtungen 2 erzeugten bzw. in den Fahrzeuginnenraum abgegebenen Lichts erfolgen.

Um eine noch umfassendere Bewertung des aktuellen Fahrzustands des Kraftfahrzeugs 1 zu erreichen, ist die Steuereinrichtung 3 dazu eingerichtet, in die Ermittlung des Fahrzustandsbewertungsparameters auch eine den Streckenverlauf der von dem Kraftfahrzeug 1 aktuell befahrenen Strecke wenigstens abschnittsweise beschreibende Streckeninformation mitzubeziehen.

Durch die Miteinbeziehung einer entsprechenden, den Streckenverlauf beschreibenden Streckeninformation kann eine exaktere Bewertung des aktuellen Fahrzustands, d. h. insbesondere auch eine exaktere Ermittlung entsprechender Maximalwerte (Grenzwerte) der Längs- und/oder Querbeschleunigung vorgenommen werden, da derart z. B. Kurvenradien, Längs- und/oder Querneigungen der Fahrbahn sowie der Fahrbahnbelag, d. h. insbesondere die Oberflächenbeschaffenheit der Fahrbahn bzw. des Fahrbahnbelags, mithin sämtliche auf die aktuell oder künftig befahrene Strecke bezogene, die jeweiligen Maximalwerte der Längs- und/oder Querbeschleunigung möglicherweise beeinflussende Streckenparameter berücksichtigt werden können.

Die Streckeninformation kann beispielsweise auf Basis von in einem Speicher hinterlegten Strecken- oder Navigationsdaten bereitgestellt werden. Es kann ferner möglich sein, dass der Streckenverlauf von einem Fahrer individuell vorgegeben wird, was beispielsweise zweckmäßig ist, wenn der Fahrer das Kraftfahrzeug 1 auf einer vorgegebenen, insbesondere rundkursartigen, Rennstrecke bewegen möchte. Der Fahrer kann eine den Streckenverlauf, d. h. insbesondere den kompletten Streckenverlauf, beschreibende Streckeninformation datenmäßig über eine geeignete Datenschnittstelle an das Kraftfahrzeug 1 respektive die Steuereinrichtung 3 übermitteln.

Die Streckeninformation beinhaltet bzw. beschreibt insbesondere Streckenabschnitte, in welchen das Kraftfahrzeug 1 verzögert werden muss, um nicht von der Strecke abzukommen (Brems- oder Verzögerungspunkte), und/oder Streckenabschnitte, in welchen das Kraftfahrzeug beschleunigt werden muss, um den Streckenabschnitt möglichst dynamisch zu durchfahren (Beschleunigungspunkte). Dabei ist es denkbar, dass die in der Streckeninformation beschriebenen Streckenabschnitte anhand eines mehrmaligen Befahrens der die Streckenabschnitte umfassenden Strecke ermittelt sind. Die Streckeninformation kann sonach über geeignete Algorithmen dahin ergänzt werden, dass diese nach und nach um entsprechende, für eine optimale Fahrdynamik erforderliche Brems- oder Verzögerungspunkte und Beschleunigungspunkte erweitert wird.

Die besonderen Vorteile des Kraftfahrzeugs 1 sollen anhand der Fig. 2, 3, welche jeweils eine Prinzipdarstellung des Kraftfahrzeugs 1 in einer bestimmten Fahrsituation zeigen, beschrieben werden. Die in den Fig. 2, 3 gezeigten Fahrsituation beziehen sich jeweils auf die Fahrt auf einer Rennstrecke, so dass es hier gilt, das Kraftfahrzeug 1 möglichst dynamisch zu bewegen.

Fig. 2 zeigt eine Fahrsituation, in welcher sich das Kraftfahrzeug 1 mit einer bestimmten Geschwindigkeit bzw. Längsbeschleunigung auf eine voraus liegende Linkskurve bewegt. Der für eine optimale Durchfahrt der Kurve erforderliche Verzögerungsbereich, d. h. der Streckenabschnitt, an dem das Kraftfahrzeug 1 abgebremst bzw. verzögert werden soll, liegt kurz vor dem Einfahren in die Kurve (vgl. schraffierter Bereich 6). Ersichtlich befindet sich das Kraftfahrzeug 1 aktuell sonach noch um ein gewisses Stück vor dem Verzögerungsbereich.

Auf Basis des ermittelten Fahrzustandsbewertungsparameters, in welchen, wie beschrieben, auch entsprechende Streckeninformationen und somit insbesondere auch der voraus liegende Verzögerungsbereich eingehen kann, wird dem Fahrer durch eine entsprechenden Beleuchtung des Fahrzeuginnenraums kenntlich gemacht werden, dass ein Abbremsen des Kraftfahrzeugs 1 und somit eine Veränderung der Längsbeschleunigung gegenwärtig noch nicht erforderlich ist, um das Kraftfahrzeug 1 im physikalischen Grenzbereich durch die voraus liegende Kurve zu bewegen. Erst wenn sich das Kraftfahrzeug 1 z. B. 50m vor dem Verzögerungsbereich befindet, können über eine entsprechende Ansteuerung der Beleuchtungseinrichtungen 2 Lichtpulse mit einer bestimmten Frequenz in den Fahrzeuginnenraum gegeben werden. Dem Fahrer erscheinen die Lichtpulse wie ein Blinken. Die Frequenz der Lichtpulsgabe kann sich mit weiterer Annäherung an den Verzögerungsbereich erhöhen. Bei Erreichen des Verzögerungsbereichs kann eine Frequenz vorliegen, welche dem Fahrer kenntlich macht, dass er das Kraftfahrzeug 1 nun verzögern muss, um im Weiteren nicht zu riskieren, dass das Kraftfahrzeug 1 die Haftung von der Fahrbahn verliert, sondern sich im physikalischen Grenzbereich durch die Kurve bewegt.

Bei Durchfahren der Kurve (vgl. Fig. 3) kann dem Fahrer über eine auf Basis des ermittelten Fahrzustandsbewertungsparameters generierte Beleuchtungssituation des Fahrzeuginnenraums angezeigt werden, wie eine von ihm vorgenommene Verzögerung des Kraftfahrzeugs 1 respektive allgemein die von ihm gewählte Kurvengeschwindigkeit und somit die damit zusammenhängende aktuelle Längs- und Querbeschleunigung des Kraftfahrzeugs 1 im Hinblick auf eine möglichst optimale Fahrdynamik bewertet wird. Wiederum kann dem Fahrer z. B. über eine rötliche Beleuchtung des Fahrzeuginnenraums kenntlich gemacht werden, dass er sich nicht in dem physikalischen Grenzbereich bewegt und eine Beschleunigung, d. h. Gasgeben, bzw. ein stärkerer Lenkradeinschlag möglich ist, um das Kraftfahrzeug 1 im physikalischen Grenzbereich ohne das Risiko eines Verlusts der Haftung auf der Fahrbahn durch die Kurve zu bewegen.

Gleiches gilt für das Herausbeschleunigen des Kraftfahrzeugs 1 aus der Kurve. Auch hier kann über eine auf Basis des ermittelten Fahrzustandsbewertungsparameters generierte Beleuchtungssituation des Fahrzeuginnenraums angezeigt werden, wann eine entsprechende Beschleunigung, d. h ein Gasgeben, erforderlich ist, um so die Motorleistung optimal auszunutzen, um das Kraftfahrzeug 1 im physikalischen Grenzbereich ohne das Risiko eines Verlusts der Haftung von der Fahrbahn aus der Kurve zu bewegen.

Insgesamt ist es daher möglich, dem Fahrer des Kraftfahrzeugs 1 durch entsprechende unterschiedliche bzw. sich ändernde Beleuchtungssituationen des Fahrzeuginnenraums kenntlich zu machen, ob bzw. wie er das Kraftfahrzeug 1 im physikalischen Grenzbereich bewegt. Der Fahrer des Kraftfahrzeugs 1 wird derart bei der Umsetzung einer möglichst dynamischen Fahrweise unterstützt, da ihm die Bewertung seiner aktuellen Fahrweise und dem damit zusammenhängenden aktuellen Fahrzustand optisch gut wahrnehmbar über eine entsprechende Beleuchtung des Fahrzeuginnenraums kenntlich gemacht wird.

## Patentansprüche

1. Kraftfahrzeug (1), umfassend wenigstens eine Beleuchtungseinrichtung (2), welche zur Beleuchtung wenigstens eines Teils des Fahrzeuginnenraums ausgebildet ist, sowie eine Steuereinrichtung (3), welche zur Steuerung des Betriebs der Beleuchtungseinrichtung (2) ausgebildet ist, wobei die Steuereinrichtung (3) derart eingerichtet ist, den Betrieb der Beleuchtungseinrichtung (2) in Abhängigkeit wenigstens eines im Fahrbetrieb des Kraftfahrzeugs (1) auf Basis des aktuellen Fahrzustands ermittelten, den aktuellen Fahrzustand bewertenden Fahrzustandsbewertungsparameters zu steuern,
**dadurch gekennzeichnet,**
**dass** die Steuereinrichtung (3) dazu eingerichtet ist, den Fahrzustandsbewertungsparameter anhand eines Vergleichs der aktuellen Längs- und/oder Querbeschleunigung des Kraftfahrzeugs (1) mit einem auf die aktuelle Fahrsituation bezogenen Maximalwert der Längs- und/oder Querbeschleunigung, bei welchem die Haftung des Kraftfahrzeugs (1) auf der Fahrbahn noch gewährleistet ist, zu ermitteln.

2. Kraftfahrzeug nach Anspruch 1,
**dadurch gekennzeichnet,**
**dass** der Maximalwert für die Längsbeschleunigung sich auf eine bezogen auf die aktuelle Fahrsituation maximal mögliche Längsbeschleunigung des Kraftfahrzeugs (1) bezieht, bei welcher das Kraftfahrzeug (1) längsbeschleunigungsbedingt die Haftung auf der Fahrbahn nicht verliert.

3. Kraftfahrzeug nach Anspruch 2,
**dadurch gekennzeichnet,**
**dass** die Steuereinrichtung (3) dazu eingerichtet ist, in die Ermittlung der maximal möglichen Längsbeschleunigung die auf den aktuellen Fahrzustand bezogene maximal mögliche Motorleistung, insbesondere Motordrehmoment, mit einzubeziehen.

4. Kraftfahrzeug nach einem der vorangehenden Ansprüche,
**dadurch gekennzeichnet,**
**dass** der Maximalwert für die Querbeschleunigung sich auf eine bezogen auf die aktuelle Fahrsituation maximal mögliche Querbeschleunigung des Kraftfahrzeugs (1) bezieht, bei welcher das Kraftfahrzeug (1) querbeschleunigungsbedingt die Haftung auf der Fahrbahn nicht verliert.

5. Kraftfahrzeug nach Anspruch 4,
**dadurch gekennzeichnet,**
**dass** die Steuereinrichtung (3) dazu eingerichtet ist, in die Ermittlung der maximal möglichen Querbeschleunigung eine auf den aktuellen Fahrzustand bezogene, den Schlupf wenigstens eines Rads des Kraftfahrzeugs (1) beschreibende Schlupfinformation mit einzubeziehen.

6. Kraftfahrzeug nach einem der vorangehenden Ansprüche,
**dadurch gekennzeichnet,**
**dass** die Steuereinrichtung (3) dazu eingerichtet ist, in die Ermittlung des Fahrzustandsbewertungsparameters eine den Streckenverlauf der aktuell befahrenen Strecke wenigstens abschnittsweise beschreibende Streckeninformation mit einzubeziehen.

7. Kraftfahrzeug nach Anspruch 6,
**dadurch gekennzeichnet,**
**dass** die Streckeninformation Streckenabschnitte, in welchen das Kraftfahrzeug (1) verzögert werden muss, um nicht von der Strecke abzukommen, und/oder Streckenabschnitte, in welchen das Kraftfahrzeug (1) beschleunigt werden muss, um den Streckenabschnitt möglichst dynamisch zu durchfahren, beschreibt.

8. Kraftfahrzeug nach Anspruch 7,
**dadurch gekennzeichnet,**
**dass** die in der Streckeninformation beschriebenen Streckenabschnitte anhand eines mehrmaligen Befahrens der Streckenabschnitte ermittelbar oder ermittelt sind.

9. Kraftfahrzeug nach einem der vorangehenden Ansprüche,
**dadurch gekennzeichnet,**
**dass** die Steuereinrichtung (3) dazu eingerichtet ist, in Abhängigkeit des Fahrzustandsbewertungsparameters die Farbgebung und/oder Frequenz und/oder Intensität des von der Beleuchtungseinrichtung (2) ausgestrahlten Lichts zu variieren.

10. Verfahren zum Betrieb wenigstens einer kraftfahrzeugseitigen Beleuchtungseinrichtung (2), welche zur Beleuchtung wenigstens eines Teils des Fahrzeuginnenraums eines Kraftfahrzeugs (1) ausgebildet ist, wobei der Betrieb der Beleuchtungseinrichtung (2) in Abhängigkeit wenigstens eines im Fahrbetrieb des Kraftfahrzeugs (1) auf Basis des aktuellen Fahrzustands ermittelten, den aktuellen Fahrzustand bewertenden Fahrzustandsbewertungsparameters gesteuert wird,
**dadurch gekennzeichnet,**
**dass** der Fahrzustandsbewertungsparameter anhand eines Vergleichs der aktuellen Längs- und/oder Querbeschleunigung des Kraftfahrzeugs (1) mit einem auf die aktuelle Fahrsituation bezogenen Maximalwert der Längs- und/oder Querbeschleunigung, bei welchem die Haftung des Kraftfahrzeugs (1) auf der Fahrbahn noch gewährleistet ist, ermittelt wird.

11. Verfahren nach Anspruch 10,
**dadurch gekennzeichnet,**
**dass** in die Ermittlung des Fahrzustandsbewertungsparameters eine den Streckenverlauf der von dem Kraftfahrzeug (1) aktuell befahrenen Strecke wenigstens abschnittsweise beschreibende Streckeninformationen miteinbezogen wird.

12. Verfahren nach Anspruch 10 oder 11,
**dadurch gekennzeichnet,**
**dass** in Abhängigkeit des Fahrzustandsbewertungsparameters die Farbgebung und/oder Frequenz und/oder Intensität des von der Beleuchtungseinrichtung (2) ausgestrahlten Lichts variiert wird.

## Claims

1. Motor vehicle (1), comprising at least one lighting device (2), which is designed to illuminate at least one portion of the vehicle interior, as well as a control device (3) which is designed to control the operation of the lighting device (2), wherein the control device (3) is configured so as to control the operation of the lighting device (2) as a function of at least one driving status evaluation parameter, which is determined during the driving operation of the motor vehicle (1) on the basis of the current driving status and evaluates the current driving status,
**characterised in that**
the control device (3) is configured to determine the driving status evaluation parameter by means of a comparison of the current longitudinal and/or lateral acceleration of the motor vehicle (1) with a maximum value of the longitudinal and/or lateral acceleration related to the current driving situation, at which the adherence of the motor vehicle (1) to the road is still ensured.

2. Motor vehicle according to claim 1,
**characterised in that**
the maximum value for the longitudinal acceleration relates to a maximum possible longitudinal acceleration of the motor vehicle (1) relative to the current driving situation, at which the motor vehicle (1) does not lose adherence to the road as a condition of the longitudinal acceleration.

3. Motor vehicle according to claim 2,
**characterised in that**
the control device (3) is configured to include the maximum possible engine power, in particular the motor torque, relative to the current driving status, in the determination of the maximum possible longitudinal acceleration.

4. Motor vehicle according to any of the preceding claims,
**characterised in that**
the maximum value for the lateral acceleration relates to a maximum possible lateral acceleration of the motor vehicle (1) relative to the current driving situation, at which the motor vehicle (1) does not lose its adherence to the road as a condition of the lateral acceleration.

5. Motor vehicle according to claim 4,
**characterised in that**
the control device (3) is configured to include slip information relative to the current driving status describing the slip of at least one wheel of the motor vehicle (1) in the determination of the maximum possible lateral acceleration.

6. Motor vehicle according to any of the preceding claims,
**characterised in that**
the control device (3) is configured to include route information describing at least partly the course of the currently driven route in the determination of the driving status evaluation parameter.

7. Motor vehicle according to claim 6,
**characterised in that**
the route information describes road sections, in which the motor vehicle (1) has to be slowed down, so as not to deviate from the route, and/or road sections in which the motor vehicle (1) has to be accelerated in order to drive on the section of road as dynamically as possible.

8. Motor vehicle according to claim 7,
**characterised in that**
the road sections described in the route information can be determined or are determined with reference to multiple journeys on said sections of road.

9. Motor vehicle according to any of the preceding claims,
**characterised in that**
the control device (3) is configured to vary the colour and/or frequency and/or intensity of the light emitted by the lighting device (2) as a function of the driving status evaluation parameter.

10. Method for operating at least one motor vehicle-side lighting device (2), which is designed to illuminate at least one portion of the interior of a motor vehicle (1), wherein the operation of the lighting device (2) is controlled as a function of at least one driving status evaluation parameter, which is determined during the driving operation of the motor vehicle (1) on the basis of the current driving status and evaluates the current driving status,
**characterised in that**
the driving status evaluation parameter is determined with reference to a comparison of the current longitudinal and/or lateral acceleration of the motor vehicle (1) with a maximum value of the longitudinal and/or lateral acceleration related to the current driving situation, at which the adherence of the motor vehicle (1) to the road is still ensured.

11. Method according to claim 10,
**characterised in that**
route information describing the route of the road currently driven by the motor vehicle (1) at least in some sections is included in the determination of the driving status evaluation parameter.

12. Method according to claim 10 or 11,
**characterised in that** the colour and/or frequency and/or intensity of the light emitted by the lighting device (2) is varied as a function of the driving status evaluation parameter.

## Revendications

1. Véhicule automobile (1), comprenant au moins un dispositif d'éclairage (2), qui est conçu pour éclairer au moins une partie de l'habitacle de véhicule, ainsi qu'un dispositif de commande (3), qui est conçu pour commander le fonctionnement du dispositif d'éclairage (2),
dans lequel le dispositif de commande (3) est équipé de manière à commander le fonctionnement du dispositif d'éclairage (2) en fonction d'au moins un paramètre d'évaluation d'état de roulage déterminé sur la base de l'état de roulage actuel lorsque le véhicule automobile (1) roule et évaluant l'état de roulage actuel,
**caractérisé en ce que** le dispositif de commande (3) est équipé pour déterminer le paramètre d'évaluation d'état de roulage à l'aide d'une comparaison de l'accélération longitudinale et/ou transversale actuelle du véhicule automobile (1) avec une valeur maximale, se rapportant à la situation de roulage actuelle, de l'accélération longitudinale et/ou transversale, valeur maximale pour laquelle l'adhérence du véhicule automobile (1) sur la chaussée est encore garantie.

2. Véhicule automobile selon la revendication 1, **caractérisé en ce que** la valeur maximale pour l'accélération longitudinale se rapporte à une accélération longitudinale, maximale possible par rapport à la situation de roulage actuelle, du véhicule automobile (1), accélération pour laquelle le véhicule automobile (1) ne perd pas l'adhérence sur la chaussée à cause de l'accélération longitudinale.

3. Véhicule automobile selon la revendication 2, **caractérisé en ce que** le dispositif de commande (3) est équipé pour inclure dans la détermination de l'accélération longitudinale maximale possible la puissance de moteur maximale possible par rapport à l'état de roulage actuel, en particulier le couple du moteur.

4. Véhicule automobile selon l'une des revendications précédentes, **caractérisé en ce que** la valeur maximale pour l'accélération transversale se rapporte à une accélération transversale, maximale possible par rapport à la situation de roulage actuelle, du véhicule automobile (1), accélération pour laquelle le véhicule automobile (1) ne perd pas l'adhérence sur la chaussée à cause de l'accélération transversale.

5. Véhicule automobile selon la revendication 4, **caractérisé en ce que** le dispositif de commande (3) est équipé pour inclure dans la détermination de l'accélération transversale maximale possible une information de glissement se rapportant à l'état de roulage actuel et décrivant le glissement d'au moins une roue du véhicule automobile (1).

6. Véhicule automobile selon l'une quelconque des revendications précédentes, **caractérisé en ce que** le dispositif de commande (3) est équipé pour inclure dans la détermination du paramètre d'évaluation d'état de roulage une information de trajet décrivant au moins en partie l'allure de trajet du trajet actuellement parcouru.

7. Véhicule automobile selon la revendication 6, **caractérisé en ce que** l'information de trajet décrit des tronçons de trajet dans lesquels le véhicule automobile (1) doit être ralenti pour ne pas sortir du trajet et/ou des tronçons de trajet dans lesquels le véhicule automobile (1) doit être accéléré pour parcourir le tronçon de trajet de la façon la plus dynamique possible.

8. Véhicule automobile selon la revendication 7, **caractérisé en ce que** les tronçons de trajet décrits dans l'information de trajet sont ou peuvent être déterminés à l'aide de multiples parcours des tronçons de trajet.

9. Véhicule automobile selon l'une quelconque des revendications précédentes, **caractérisé en ce que** le dispositif de commande (3) est équipé pour modifier en fonction du paramètre d'évaluation d'état de roulage la couleur et/ou la fréquence et/ou l'intensité de la lumière émise par le dispositif d'éclairage (2).

10. Procédé de fonctionnement d'au moins un dispositif d'éclairage (2) côté véhicule automobile, lequel dispositif d'éclairage est conçu pour éclairer au moins une partie de l'habitacle de véhicule d'un véhicule automobile (1),
dans lequel le fonctionnement du dispositif d'éclairage (2) est commandé en fonction d'au moins un paramètre d'évaluation d'état de roulage déterminé sur la base de l'état de roulage actuel lorsque le véhicule automobile (1) roule et évaluant l'état de roulage actuel,
**caractérisé en ce que** le paramètre d'évaluation d'état de roulage est déterminé à l'aide d'une comparaison de l'accélération longitudinale et/ou transversale actuelle du véhicule automobile (1) avec une valeur maximale, se rapportant à la situation de roulage actuelle, de l'accélération longitudinale et/ou transversale, valeur maximale pour laquelle l'adhérence du véhicule automobile (1) sur la chaussée est encore garantie.

11. Procédé selon la revendication 10, **caractérisé en ce que**, dans la détermination du paramètre d'évaluation d'état de roulage, on inclut une information de trajet décrivant au moins en partie l'allure de trajet du trajet actuellement parcouru par le véhicule automobile (1).

12. Procédé selon la revendication 10 ou 11, **caractérisé en ce que**, en fonction du paramètre d'évaluation d'état de roulage, on modifie la couleur et/ou la fréquence et/ou l'intensité de la lumière émise par le dispositif d'éclairage (2).
